# EUROPÄISCHE PATENTANMELDUNG

(11) **EP 2 565 440 A2**
(43) Veröffentlichungstag der Anmeldung: **06.03.2013**
(21) Anmeldenummer: 12006143.7
(22) Anmeldetag: 29.08.2012
(51) Int. Cl.: F03D 1/00

(54) **Gurtsystem zur Einzelblattmontage eines Rotorblattes oder zur Sternmontage eines Rotors an einer Windenergieanlage sowie Verfahren hierzu**

(30) Priorität: 31.08.2011 DE 102011111967
(71) Anmelder: Nordex Energy GmbH, 22419 Hamburg (DE)
(72) Erfinder: Fischer, Gunter, 22081 Hamburg (DE)
(74) Vertreter: Schildberg, Peter

(57) **Zusammenfassung**

Gurtsystem zur Einzelblattmontage eines Rotorblatts oder zur Sternmontage eines Rotors mit mehreren Rotorblättern an einer Windenergieanlage, gekennzeichnet durch,
• eine Spannvorrichtung, die im auf das Rotorblatt aufgezogenen Zustand des Gurtsystems blattwurzelseitig um das Rotorblatt verläuft,
• ein Fixiermittel, das im auf das Rotorblatt aufgezogenen Zustand des Gurtsystems blattspitzenseitig um das Rotorblatt verläuft,
• mindestens einen in Blattlängsrichtung verlaufenden Längsgurt, der sich zwischen der Spannvorrichtung und dem Fixiermittel erstreckt,
• mindestens einen in Blattquerrichtung verlaufenden Quergurt, der mit mindestens einem Längsgurt verbunden ist und
• mindestens einen aerodynamisch wirksamen Störkörper, der an dem mindestens einen an einem Längsgurt und/oder Quergurt angeordneten ist aerodynamisch wirksamen Störkörper.

## Beschreibung

Die vorliegende Erfindung betrifft ein Gurtsystem zur Einzelblattmontage eines Rotorblattes oder zur Sternmontage eines Rotors an einer Windenergieanlage. Ferner betrifft die Erfindung ein Verfahren zur Einzelblattmontage eines Rotorblatts oder zur Sternmontage eines Rotors mit mehreren Rotorblättern an eine Windenergieanlage.

Die Montage von Windenergieanlagen im Feld verursacht erfahrungsgemäß hohe Kosten durch Transport, Montage und Inbetriebnahme. Die Kosten bei der Montage sind hauptsächlich auf den Einsatz von schweren Kränen zurückzuführen. Bei einer solchen Montage werden die Rotorblätter entweder einzeln bei der sogenannten Einzelblattmontage montiert oder es werden alle Rotorblätter einer Windenergieanlage bereits am Boden mit der Rotornabe verbunden und gleichzeitig als Rotorstern bei der sogenannten Sternmontage montiert.

Da Windräder an windstarken Standorten aufgebaut werden, treten bereits während der Montage durch den Wind verursachte Kräfte an den Rotorblättern auf. Bei Windgeschwindigkeiten von über 9 m/s sind im Allgemeinen durch unkontrollierte Bewegungen der Rotorblätter keine Kranarbeiten zur Montage eines Rotorblatts mehr möglich. Problematisch sind die am Rotorblatt bei Windgeschwindigkeiten von über 9 m/s auftretenden Auftriebskräfte, die eine Montage für das beteiligte Personal unmöglich machen.

Eine Blattbedeckung zur Reduzierung von unkontrollierten Bewegungen an bereits montierten und sich im Leerlauf oder im Stillstand befindenden Rotorblättern ist aus der WO 2011/067304 A1 bekannt. Diese Blattbedeckung kann entweder vor der Installation oder im Feld an ein Rotorblatt der Windeenergieanlage vom Servicepersonal aufgezogen werden.

Aus der EP 1794451 B1 ist eine Hülle mit farblicher Gestaltung zur vorübergehenden Kennzeichnung eines Rotorblattes einer Windenergieanlage als Luftfahrthindernis bekannt, die das Rotorblatt wenigsten teilweise umschließt.

Aus EP 2 224 126 A2 ist ein Gurtsystem zur Einzelblattmontage bekannt, mit dem das zu montierende Rotorblatt in einer 6 Uhr Position über zwei an der Rotornabe befestigte Hebezüge angehoben werden kann. Das bekannte Gurtsystem besitzt einen Hinterkantenschutz, der über vorstehende Flansche eine horizontale Lagerung des Rotorblatts vor der Montage erlaubt.

Davon ausgehend liegt der vorliegenden Erfindung die Aufgabe zugrunde eine Vorrichtung und ein Verfahren zur Verfügung zu stellen, die die Montage von Rotorblättern vereinfachen und auch bei höheren Windgeschwindigkeiten ermöglichen.

Diese Aufgabe wird gelöst durch eine Vorrichtung mit den Merkmalen des Anspruchs 1 und ein Verfahren mit den Merkmalen des Anspruchs 14. Bevorzugte Ausführungsformen der Erfindung sind in den Unteransprüchen angegeben.

Die vorliegende Erfindung betrifft ein Gurtsystem zur Einzelblattmontage eines Rotorblatts oder zur Sternmontage eines Rotors mit mehreren Rotorblättern an einer Windenergieanlage. Das Gurtsystem besitzt eine Spannvorrichtung, die im auf das Rotorblatt aufgezogenen Zustand des Gurtsystems blattwurzelseitig um das Rotorblatt verläuft. Ferner ist ein Fixiermittel vorgesehen, das im auf das Rotorblatt aufgezogenen Zustand des Gurtsystems blattspitzenseitig um das Rotorblatt verläuft.

Hierbei bedeutet blattwurzelseitig in Hinblick auf die Spannvorrichtung, dass die Spannvorrichtung relativ zum Fixiermittel näher an der Blattwurzelseite des Rotorblatts als zu dessen Blattspitze angeordnet ist. Entsprechend bedeutet blattspitzenseitig in Hinblick auf das Fixiermittel, dass das Fixiermittel relativ zur Spannvorrichtung näher an der Blattspitze als zu der Blattwurzel angeordnet ist. Das Fixiermittel kann sich direkt an der Blattspitze befinden. Es kann aber auch in einem Abstand von der Blattspitze entfernt angeordnet sein, so dass die Blattspitze aus dem Gurtsystem herausragt. Ferner sind erfindungsgemäß mindestens ein in Blattlängsrichtung verlaufender Längsgurt, der sich zwischen der Spannvorrichtung und dem Fixiermittel erstreckt, und mindestens ein in Blattquerrichtung verlaufender Quergurt vorgesehen, der mit dem mindestens einem Längsgurt verbunden ist. Ferner ist mindestens ein an einem Längsgurt oder Quergurt aerodynamisch wirksamer Störkörper angeordnet.

Das erfindungsgemäße Gurtsystem wird vor der Montage am Boden in Längsrichtung auf ein zu montierendes Rotorblatt aufgezogen, wobei die Spannvorrichtung, die im auf das Rotorblatt aufgezogenen Zustand des Gurtsystems blattwurzelseitig um das Rotorblatt verläuft, gespannt wird, so dass die in Blattlängsrichtung angeordneten Gurte unter Spannung gehalten werden. Das unter Spannung halten der Gurte wird zusätzlich von dem blattspitzenseitigen Fixiermittel unterstützt.

Ferner weist das erfindungsgemäße Gurtsystem Quergurte auf, die mit dem mindestens einen oder mit einer Mehrzahl an Längsgurten verbunden sind. Die Quergurte können fest oder lösbar mit den Längsgurten verbunden sein. An den Quergurten und/oder Längsgurten sind Störkörper befestigt, die die laminare Umströmung des Rotorblattes in der Luft mindestens teilweise zerstören und damit einen aerodynamischen Auftrieb vermindern. Diese Störkörper sind folglich aerodynamisch wirksam und erlauben eine Montage auch bei höheren Windgeschwindigkeiten, da die vom Wind hervorgerufenen Kräfte reduziert werden. Zusätzlich kann das erfindungsgemäße Gurtsystem einerseits einfach transportiert werden und andererseits einfach auf das beziehungsweise von dem Rotorblatt aufgezogen bzw. abgezogen werden.

Gemäß einer bevorzugten Ausgestaltung ist mindestens eine Hinterkantenfixierung an der Hinterkante des zu montierenden und mit dem Gurtsystem bespannten Rotorblattes angeordnet. Die Hinterkantenfixierung verhindert ein Durchrutschen des mindestens einen Quergurtes in Längsrichtung des Rotorblattes und schützt den mindestens einen Quergurt zugleich davor, durch ein wiederholtes Verrutschen entlang der Hinterkante des Rotorblattes mit der Zeit durchschnitten zu werden. Zusätzlich wird der empfindliche Bereich der dünnen Hinterkante vor überhöhter mechanischer Beanspruchung durch den Quergurt geschützt. Besonders bevorzugt ist an jedem Quergurt jeweils eine Hinterkantenfixierung vorgesehen, so dass alle Quergurte eine auf die Blattform abgestimmte Hinterkantenfixierung besitzen. Bevorzugt kann die Hinterkantenfixierung mit einer Aussparung versehen sein, durch die der Quergurt geführt ist.

In einer Weiterleitung weist das Gurtsystem eine Mehrzahl von an einem Teil der Längsgurte und/oder an einem Teil der Quergurte angeordneten aerodynamischen Störkörpern auf, die eine laminare Blattumströmung mindestens teilweise zerstören. Durch Anordnen der aerodynamischen Störkörper wird der Erzeugung aerodynamischer Kräfte entgegen gewirkt, so dass auch bei Windgeschwindigkeiten von über 9 m/s eine Rotorblattmontage ermöglicht wird.

Zweckmäßigerweise sind die Störkörper im aufgezogenen Zustand des Gurtsystems auf ein Rotorblatt über mindestens einen Bereich der Oberfläche des Rotorblatts verteilt. Die Störkörper können auch über die gesamte Oberfläche des Rotorblattes verteilt angeordnet sein. Die Störkörper können ebenso auf einer Seite des Rotorblattes, also auf der Saugseite oder der Druckseite angeordnet sein. Ferner können die Störkörper im aufgezogenen Zustand des Gurtsystems auf ein Rotorblatt sowohl teilweise dichter nebeneinander oder auch gleichmäßig beabstandet über der Oberfläche des Rotorblattes verteilt sein.

Bevorzugt ist die Oberfläche der Störkörper derart beschaffen, dass sie die mindestens teilweise Zerstörung der laminaren Blattumströmung fördert. Die Störkörper können eine raue Oberfläche besitzen. Die Oberfläche kann aber auch eine profilierte Struktur aufweisen.

Eine weitere Ausführung sieht vor, dass die Störkörper unterschiedlich lang und/oder breit ausgebildet sind, insbesondere können die Störkörper nahe der Spitze des Rotorblattes kleiner oder größer als in der Mitte des Rotorblattes sein. Die unterschiedlichen Ausmaße und Verteilungsdichten der Störkörper erlauben, die Reduzierung der aerodynamischen Auftriebskräfte bzw. Widerstandskräfte abhängig von der Geometrie des Rotorblatts zu reduzieren.

Gemäß einer weiteren Ausführung sind die Störkörper als Polyeder ausgebildet, bevorzugt als prismaförmige Körper mit beispielsweise einer dreieckigen Querschnittsfläche. Auch andere geometrische Körper, wie Quader, oder andere vieleckige Körper oder eliptische Körper sind denkbar. Insbesondere sind auch verzerrte oder asymmetrische Körper möglich. Die Störkörper verhindern eine Blattumströmung, so dass eine aerodynamische Kraft am Blatt während der Montage reduziert wird.

Für eine weitere Ausführung sind die Störkörper bevorzugt aus Schaumstoff gefertigt, so dass die Störkörper in vorteilhafter Weise zusammengedrückt werden, wenn sie von Hebegurten beim Anheben des Rotorblatts erfasst werden. Nach Entfernen oder Lockern der Hebegurte entfalten sich die Störkörper wieder zurück in ihren ursprünglichen Zustand. Bevorzugt werden elastomere Schaumstoffe wie PUR (Polyurethane) benutzt, da diese besonders flexible und resistent sind.

Gemäß einer weiteren Ausführung kann die Lebensdauer der Störkörper verlängert werden, indem ein Witterungsschutz auf die Oberfläche der Störkörper aufgetragen wird bzw. die Störkörper in eine textile verwitterungsresistente Hülle eingebracht werden. Der Witterungsschutz vermeidet, dass sich die Störkörper mit Regenwasser vollsaugen und dadurch mit der Zeit spröde und brüchig werden.

Bei einer weiteren Ausgestaltung hält die Spannvorrichtung die in Blattlängsrichtung angeordneten Längsgurte gegen das Fixiermittel unter Spannung, so dass das Gurtsystem nicht verrutschen kann und die gespannten Gurte die Störkörper fest auf dem Rotorblatt halten.

Für eine weitere Ausgestaltung ist das Fixiermittel als Blattspitzenfixierung ausgebildet, wobei die Blattspitzenfixierung beispielsweise passgenau auf der Blattspitze angeordnet ist. Eine passgenaue Blattspitzenfixierung erlaubt es, die Blattspitze vor Beschädigungen während der Montage zu schützen. Ferner vermeidet die Blattspitzenfixierung ein Verrutschen des gespannten Gurtsystems auf dem Rotorblatt.
In einer weiteren Ausgestaltung ist das Fixiermittel nahe der Blattspitze ebenfalls als eine Spannvorrichtung ausgebildet. Das als Spannvorrichtung ausgebildete Fixiermittel kann sich in einem Abstand von der Blattspitze befinden. Eine Ausführung mit einer zweiten Spannvorrichtung als Fixiermittel ermöglicht, die spitzenseitige Position des Fixiermittels zu variieren, so dass das Gurtsystem für Rotorblätter unterschiedlicher Größe benutzt werden kann.

Gemäß einer weiteren bevorzugten Ausführung bilden die Quer- und Längsgurte ein Netz, das eine schnelle und einfache Montage des Gurtsystems auf ein Rotorblatt ermöglicht. Die zu einem Netz angeordneten Längs- und Quergurte bilden ein zusammenhängendes Netz, dessen Maschengröße, also der Abstand zwischen den Schnittpunkten von Quer- und Längsgurten, bevorzugt im Bereich von 0,3m bis 5m und besonders bevorzugt von 0,5m bis 2m liegt.

Die der Erfindung zugrunde liegende Aufgabe wird ebenfalls durch das Verfahren mit den Merkmalen aus Anspruch 14 gelöst.

Im Folgenden wird vom Gurtsystem im Singular gesprochen, wobei damit auch eine Anzahl von Gurtsystemen gemeint sein kann. Insbesondere in Hinblick auf eine Sternmontage ist eine Anzahl von Gurtsystemen gemeint.

Das vorliegende Verfahren zur Einzelblattmontage eines Rotorblatts oder zur Sternmontage eines Rotors mit mehreren Rotorblättern an einer Windenergieanlage umfasst das Aufziehen eines Gurtsystems über ein zu montierendes Rotorblatt mit einer blattwurzelseitigen Spannvorrichtung sowie mindestens einem in Blattlängsrichtung verlaufenden Längsgurt und mindestens einem in Blattquerrichtung verlaufenden Quergurt. Ferner wird blattspitzenseitig ein Fixiermittel an dem Rotorblatt angeordnet. Beim Spannen der Spannvorrichtung wird der mindestens eine Längsgurt unter Spannung gehalten, so dass der mindestens eine Längsgurt eng und straff an der Oberfläche des Rotorblatts anliegt. Ferner wird das Rotorblatt an einer Hebevorrichtung zur horizontalen Montage des Rotorblattes mittels zusätzlicher Hebegurte beziehungsweise der Rotorsterns an einem zentrierten Hebegurt zur Montage des Rotorsterns aufgehängt und montiert. Nach der Montage kann durch Lösen der Spannvorrichtung das Gurtsystem vom montierten Rotorblatt beziehungsweise von den Rotorblättern des Rotorsterns abgezogen und auf den Boden herabgelassen werden. Das bei dem erfindungsgemäßen Verfahren verwendete Gurtsystem weist mindestens einen aerodynamisch wirksamen Störkörper an einem Längsgurt und/oder Quergurt auf.

Bei der Sternmontage wird der Rotorstern zentriert an einem zugkräftigen Hebegurt aufgehängt, so dass der Rotorstern an diesem Hebegurt beispielsweise in einer Y- oder Anti-Y-Stellung hängend an der Gondel montiert werden kann.

Das Verfahren zur Einzelblattmontage oder zur Sternmontage eines Rotors einer Windenergieanlage wird im Folgenden am Beispiel der Einzelblattmontage beschrieben, wobei es analog auf die Sternmontage mit einer Vielzahl an Gurtsystemen anwendbar ist. Dabei entspricht die Anzahl der Gurtsysteme der Anzahl der Rotorblätter des zu montierenden Rotorsterns.

Am Boden wird zunächst das erfindungsgemäße Gurtsystem über das zu montierende Rotorblatt von der Blattspitze bis zur Blattwurzel oder in entgegen gesetzter Richtung aufgezogen. Das Aufziehen des Gurtsystems kann auf der Baustelle aber auch bereits vor dem Transport des Rotorblattes aus dem Fertigungswerk erfolgen.

Durch Spannen der blattwurzelseitigen Spannvorrichtung werden die Längsgurte unter Spannung gehalten. Die Breite des Rotorblattes nimmt im Bereich der aufgebrachten Spannvorrichtung zu der Blattwurzel hin ab. Daher ist die Spannvorrichtung im gespannten Zustand gesichert und kann nicht in Richtung der Blattspitze verrutschen.

Das zu montierende Rotorblatt wird mit Hilfe von Hebegurten an einer Hebevorrichtung aufgehängt, wobei ein Hebegurt näher am blattwurzelseitigen Ende und ein anderer Hebegurt näher am blattspitzenseitigen Ende angebracht wird. Als Hebevorrichtung kann beispielsweise eine Traverse verwendet werden. Das Aufhängen an einer Traverse erlaubt die Montage des Rotorblatts mit nur einem Kran.

Ist das Rotorblatt montiert, kann nach dem Entspannen der blattwurzelseitigen Spannvorrichtung das Gurtsystem von dem Rotorblatt wieder abgezogen und auf den Boden herab gelassen werden. Das Entspannen und Lösen der Spannvorrichtung kann beispielsweise mit Hilfe einer Reißleine vom Boden oder von der Gondel aus erfolgen. Alternativ kann die Spannvorrichtung mittels einer Fernbedienung gelöst werden. Nach der Montage kann das erfindungsgemäße Gurtsystem folglich ohne großen Aufwand wieder vom Rotorblatt entfernt werden, so dass dann ein weiteres Rotorblatt mit dem Gurtsystem montiert werden kann.

Gemäß einer Ausgestaltung wird mindestens eine Hinterkantenfixierung an der Hinterkante des Rotorblattes angeordnet, nachdem oder bevor das Gurtsystem auf das zu montierende Rotorblatt aufgezogen wurde. Bevorzugt weist mit Ausnahme der Spannvorrichtung jeder Quergurt des Gurtsystems eine Hinterkantenfixierung auf, die ein Verrutschen der Quergurte vermeidet und diese vor Durchschneidung durch die Hinterkante schützt.
Bevorzugt wird eine Mehrzahl von aerodynamischen Störkörpern an einem Teil der Längsgurte und/oder an einem Teil der Quergurte angeordnet wird, nachdem oder bevor das Gurtsystem auf das zu montierende Rotorblatt montiert wurde, so dass eine laminare Blattumströmung mindestens teilweise zerstört wird. Aerodynamische Kräfte können dadurch reduziert werden und folglich eine Montage ermöglicht bzw. vereinfacht werden.

Eine bevorzugte Ausführungsform vorliegender Erfindung wird unter Bezugnahme auf die Figuren 1 bis 5 näher erläutert. Es zeigen:
- Fig. 1: eine Ansicht des Rotorblatts mit aufgezogenem Gurtsystem,
- Fig. 2: eine Ansicht des Rotorblatts mit aufgezogenem Gurtsystem in einer weiteren Ausführung,
- Fig. 3: einen Querschnitt entlang A-A gemäß Fig. 1,
- Fig. 4: einen Querschnitt entlang B-B gemäß Fig. 1 und
- Fig. 5: eine Montage eines Rotorblatts unter Verwendung des erfindungsgemäßen Gurtsystems.

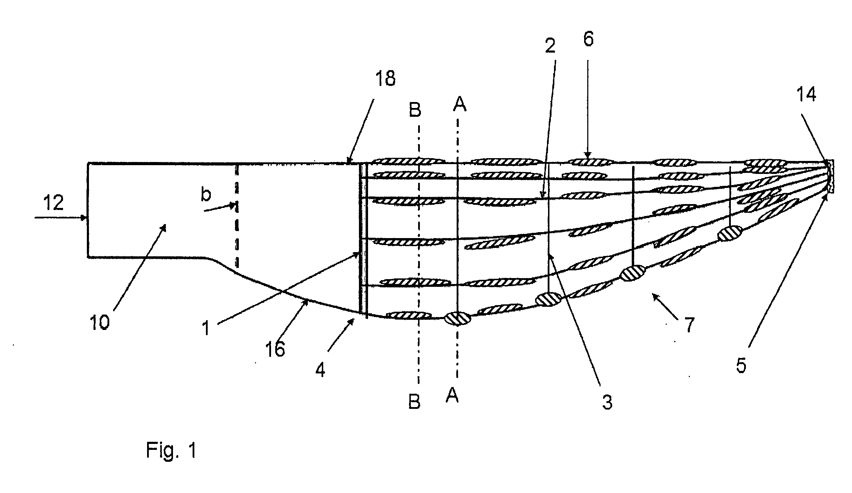

Figur 1 zeigt ein Rotorblatt 10 mit einer Blattwurzel 12, einer Blattspitze 14, einer Hinterkante 16 und einer Nasenkante 18, wobei bei einer Montage die Blattwurzel 12 mit der Rotornabe einer Windenergieanlage verbunden wird. Das Rotorblatt weist eine sich verändernde Blatttiefe b zwischen Hinterkante und Nasenkante auf. Ausgehend von der Blattwurzel 12 des Rotorblatts nimmt die Blatttiefe b bis zu ihrem Maximum zu und verjüngt sich anschließend kontinuierlich bis hin zur Blattspitze 14.

Gemäß dem Ausführungsbeispiel nach Figur 1 ist ein erfindungsgemäßes Gurtsystem 7 auf das Rotorblatt 10 aufgezogen. Das Gurtsystem 7 umfasst eine Spannvorrichtung 1, die blattwurzelseitig um das Rotorblatt 10 verläuft, und ein Fixiermittel 5, das blattspitzenseitig um das Rotorblatt 10 verläuft. Ferner erstrecken sich zwischen der Spannvorrichtung 1 und dem Fixiermittel 5 mehrere in Blattlängsrichtung verlaufende Längsgurte 2. In Blattquerrichtung verlaufen mehrere Quergurte 3, von denen jeder mit den Längsgurten 2 lösbar verbunden ist. Der der Blattwurzel am nächsten liegende Quergurt 3 ist so angeordnet, dass er sich blattspitzenseitig von der Stelle befindet, an der das Rotorblatt seine maximale Blatttiefe b aufweist. So kann sichergestellt werden, dass das Gurtsystem nach Lösen der Spannvorrichtung 1 vom Rotorblatt abgezogen werden kann. Ferner halten die Längsgurte 2 aerodynamisch wirksame Störkörper 6. Beispielsweise könnten die Störkörper 6 auch an den Quergurten 3 oder an den Quergurten 3 und den Längsgurten 2 angeordnet sein. Ebenfalls wäre eine Anordnung der Störkörper 6 zwischen den Quergurten 3 und Längsgurten 2 möglich, so dass die Störkörper 6 an die Quergurte 3 und Längsgurte 2 angrenzen.

Gemäß Figur 1 können die Störkörper 6 entlang dem gesamten Umfang des Rotorblatts 10 verteilt sein. Alternativ könnten die Störkörper 6 auf einer Seite des Rotorblatts 10 angeordnet sein. Die Verteilung der Störkörper 6 ist gemäß Figur 1 im Bereich der Blattspitze 14 dichter als im mittleren Bereich des Rotorblatts. Alternativ zu Figur 1 könnten die Störkörper 6 auf der Rotorblattfläche ungleichmäßig verteilt sein, d.h. im mittleren Bereich könnten mehr oder weniger Störkörper angeordnet sein als im Bereich der Blattspitze 14. Wie in Figur 1 dargestellt, können die Störkörper 6 unterschiedlich lang ausgebildet sein, wobei sie im mittleren Blattbereich länger als im Bereich der Blattspitze 14 ausgebildet sind. Ebenso könnten die Störkörper 6 im mittleren Blattbereich kürzer als im Bereich der Blattspitze 14 ausgebildet sein. Alternativ könnten die Störkörper 6 unterschiedlich breit oder unterschiedlich breit und lang ausgebildet sein.

In dem in Figur 1 dargestellten Gurtsystem 7 sind die Längsgurte 2 und die Quergurte 3 zu einem zusammenhängenden Netz verbunden, wobei die Längsgurte 3 und die Quergurte 2 lösbar oder fest miteinander verbunden sein können. Alternativ könnte auch nur ein Längsgurt 2 mit den Quergurten 3 zu einem zusammenhängenden Netz lösbar oder fest verbunden sein, wobei dann der einzige Längsgurt 2 mäanderförmig auf der Fläche des Rotorblatts 10 verläuft, das heißt, der einzige Längsgurt 2 läuft auf dem Rotorblatt 10 zwischen der Spannvorrichtung 1 und dem Fixiermittel 5 hin und her. Das Gurtsystem 7 kann schnell und einfach auf das zu montierende Rotorblatt 10 aufgezogen und wieder entfernt werden.

Gemäß Figur 1 weist die Blattspitze 14 ein Fixiermittel 5 auf, das wie in Figur 1 dargestellt passgenau auf der Blattspitze 14 angeordnet ist. Das Fixiermittel 5 vermeidet ein Verrutschen des Gurtsystems 7 auf dem Rotorblatt 10 und trägt damit zur Stabilisierung des Gurtsystems 7 auf dem Rotorblatt 10 bei.

Ferner weist jeder Quergurt 3 eine Hinterkantenfixierung 4 auf, so dass ein Verrutschen der Quergurte 3 vermieden wird. Zugleich werden die Quergurte 3 davor geschützt, bedingt durch ein Verrutschen der Quergurte 3 an der Hinterkante 16 von der Hinterkante 16 durchtrennt zu werden.

In Figur 1 besitzt die Spannvorrichtung 1 keine Hinterkantenfixierung 4. Alternativ könnte die Spannvorrichtung 1 ebenfalls eine Hinterkantenfixierung 4 besitzen. Durch das Spannen der Spannvorrichtung 1 werden die Längsgurte 2 gegen das Fixiermittel 5 unter Spannung gehalten, so dass die Längsgurte 2 eng an der Oberfläche des Rotorblatts 10 anliegen und somit die Zerstörung des aerodynamischen Auftriebs ermöglichen.

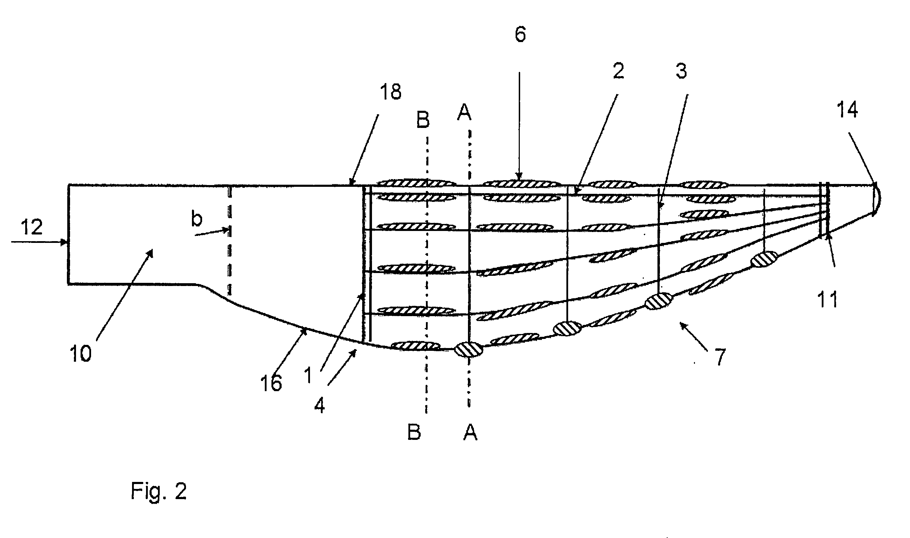

Fig. 2 zeigt ebenfalls ein Rotorblatt mit dem erfindungsgemäßen Gurtsystem 7. In der Ausgestaltung ist das Fixiermittel 5 als zweite Spannvorrichtung 11 ausgebildet. Die zweite Spannvorrichtung 11 befindet sich in einem Abstand zur Blattspitze 14. Sie ermöglicht ein Spannen der Längsgurte 2 gegen die Spannvorrichtung 1. Aufgrund der großen Länge eines Rotorblattes ist es vorteilhaft, das Gurtsystem von zwei Seiten spannen zu können.

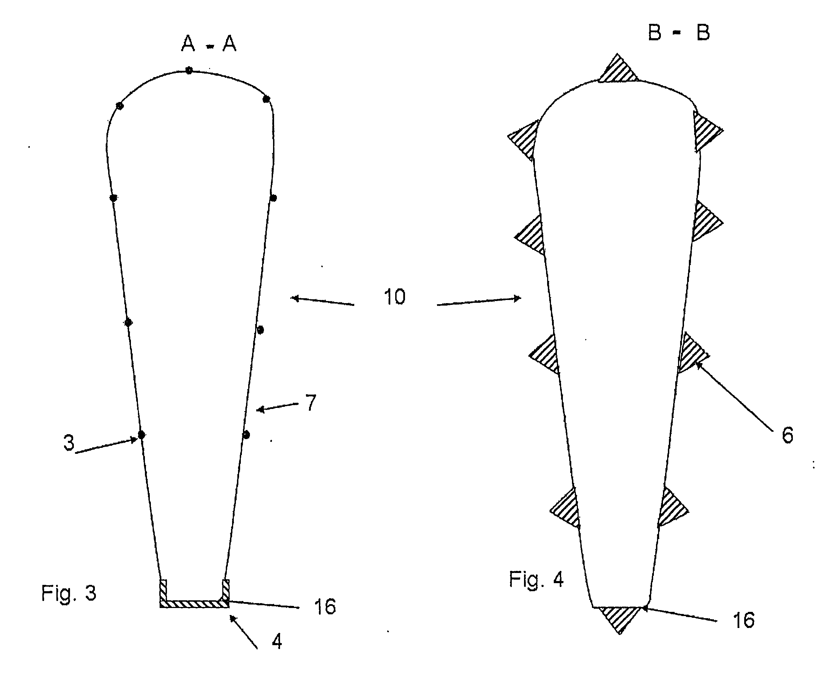

Die Figur 3 zeigt einen Querschnitt entlang der Schnittebene A-A. Der Querschnitt des Rotorblatts ist jeweils vereinfacht dargestellt und entspricht nicht dem aerodynamischen Profil. Die Schnittebene A-A liegt in einem Bereich des Gurtsystems 7, in welchem sich keine Störkörper befinden. Die Längsgurte 3 sind in im Wesentlichen gleichmäßigen Abständen auf dem Umfang des Rotorblatts angeordnet. Die stumpfe Hinterkante 16 des Rotorblatts ist mit einer Hinterkantenfixierung 4 versehen, die in ihrer Form der Geometrie der Hinterkante 16 angepasst ist.

Figur 4 zeigt einen Querschnitt entlang der Schnittebene B-B aus Figur 1. Die Schnittebene verläuft durch einen Bereich des Gurtsystems 7, in welchem die Störkörper 6 auf den Längsgurten 2 angeordnet sind. Entsprechend der Lage der Längsgurte 3 sind Störkörper im Wesentlichen gleichmäßig auf dem Umfang des Rotorblatts angeordnet.

Die Störkörper 6 besitzen einen eliptischen Körper mit einer dreieckigen Querschnittsfläche. Es wird darauf hingewiesen, dass in den Figuren 1 bis 5 die Störkörper schematisch vereinfacht gezeigt sind. Die Störkörper können auch andere Formen besitzen. Ebenfalls denkbar sind prismaförmige Störkörper mit einer dreieckigen oder einer anderen vieleckigen oder mit verzerrter oder asymmetrischer Querschnittsfläche. Ein halb-eliptischer Störkörper wäre ebenfalls denkbar. Die Störkörper bestehen aus einem relativ festen, geschlossenporigen Schaumstoffmaterial. Durch das Anschneiden der Poren auf der Oberfläche der Störkörper entsteht eine raue Oberfläche, die das Unterbrechen einer laminaren Strömung fördert. Einer der Störkörper ist im Bereich der Hinterkannte 16 angeordnet, wodurch diese einen zusätzlichen Schutz erhält.

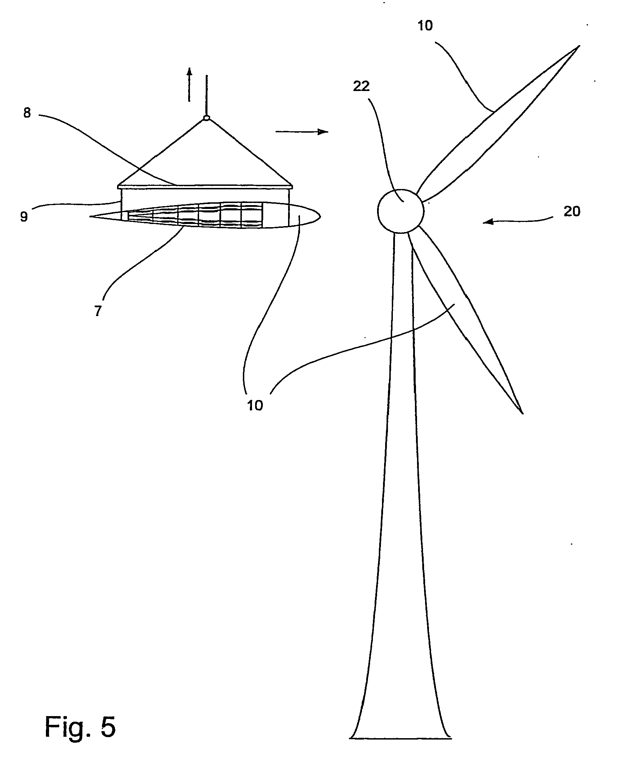

Figur 5 zeigt in einer schematischen Darstellung die Montage eines einzelnen Rotorblatts 10 an der Rotornabe 22 einer Windenergie 20. Das mit einem Gurtsystem 7 versehene Rotorblatt 10 wird mit um das Rotorblatt 10 gelegten Hebegurten 9 an einer Traverse 8 befestigt. Ein Hebegurt 9 wird nahe dem blattwurzelseitigen Ende und ein weiterer nahe dem blattspitzenseitigen Ende angebracht. Die Hebegurte 9 werden lösbar mit der Traverse 8 verbunden. Das Rotorblatt wird liegend in horizontaler Position an die Rotornabe montiert.

Nach der Montage kann das Gurtsystem 7 durch Entspannen der Spannvorrichtung 1 von dem montierten Rotorblatt 10 einfach abgezogen und zum Boden hinab gelassen werden und für die Montage eines weiteren Rotorblattes 10 genutzt werden.

## Patentansprüche

1. Gurtsystem (7) zur Einzelblattmontage eines Rotorblatts (10) oder zur Sternmontage eines Rotors mit mehreren Rotorblättern an einer Windenergieanlage (20), **gekennzeichnet durch**,
● eine Spannvorrichtung (1), die im auf das Rotorblatt (10) aufgezogenen Zustand des Gurtsystems (7) blattwurzelseitig um das Rotorblatt (10) verläuft,
● ein Fixiermittel (5), das im auf das Rotorblatt (10) aufgezogenen Zustand des Gurtsystems (7) blattspitzenseitig um das Rotorblatt (10) verläuft,
● mindestens einen in Blattlängsrichtung verlaufenden Längsgurt (2), der sich zwischen der Spannvorrichtung (1) und dem Fixiermittel (5) erstreckt,
● mindestens einen in Blattquerrichtung verlaufenden Quergurt (3), der mit mindestens einem Längsgurt (2) verbunden ist und
● mindestens einen aerodynamisch wirksamen Störkörper (6), der an dem mindestens einen Längsgurt (2) und/oder Quergurt (3) angeordnet ist.

2. Gurtsystem (7) nach Anspruch 1, wobei mindestens eine Hinterkantenfixierung (4), die ein Durchrutschen der Quergurte (3) in Längsrichtung des Rotorblattes (10) verhindert, an der Hinterkante (16) des Rotorblattes (10) angeordnet ist, wenn das Gurtsystem (7) auf das Rotorblatt (10) aufgezogen ist.

3. Gurtsystem (7) nach Anspruch 1 oder 2, wobei eine Mehrzahl von aerodynamischen Störkörpern (6) an dem mindestens einen Längsgurt (2) und/oder an dem mindestens einen Quergurt (3) angeordnet ist, wobei die aerodynamischen Störkörper (6) eine laminare Blattumströmung mindestens teilweise zerstören.

4. Gurtsystem (7) nach einem der Ansprüche 1 bis 3, wobei die aerodynamischen Störkörper (6) auf mindesten einem Teil der Oberfläche des Rotorblattes (10) angeordnet sind, wenn das Gurtsystem (7) auf das zu montierende Rotorblatt (10) aufgezogen ist.

5. Gurtsystem (7) nach einem der Ansprüche 1 bis 4, wobei die Oberfläche der aerodynamischen Störkörper (6) derart beschaffen ist, dass sie die Zerstörung einer laminaren Blattumströmung fördert.

6. Gurtsystem (7) nach einem der Ansprüche 1 bis 5, wobei die aerodynamischen Störkörper (6) entlang der Längsseite des Rotorblattes (10) unterschiedlich lang und/oder breit ausgebildet sind.

7. Gurtsystem (7) nach einem der Ansprüche 1 bis 6, wobei die aerodynamischen Störkörper (6) einen prismaförmigen oder eliptischen Körper mit einer dreieckigen Querschnittsfläche aufweisen.

8. Gurtsystem (7) nach einem der Ansprüche 1 bis 7, wobei die aerodynamischen Störkörper (6) aus einem Schaumstoff bestehen.

9. Gurtsystem (7) nach Anspruch 8, wobei der Schaumstoff mit einem Witterungsschutz versehen ist.

10. Gurtsystem (7) nach einem der Ansprüche 1 bis 9, wobei die Spannvorrichtung (1) den mindestens einen in Blattlängsrichtung angeordneten Längsgurt (2) gegen das Fixiermittel (5) unter Spannung hält.

11. Gurtsystem (7) nach einem der Ansprüche 1 bis 10, wobei das Fixiermittel (5) als eine Blattspitzenfixierung ausgebildet ist, die passgenau auf der Blattspitze (14) angeordnet werden kann.

12. Gurtsystem (7) nach einem der Ansprüche 1 bis 10, wobei das Fixiermittel (5) als eine zweite Spannvorrichtung (11) ausgebildet ist.

13. Gurtsystem (7) nach einem der Ansprüche 1 bis 12, wobei die Quergurte (3) und die Längsgurte (2) ein Netz bilden.

14. Verfahren zur Einzelblattmontage eines Rotorblatts (10) oder zur Sternmontage eines Rotors mit mehreren Rotorblättern an einer Windenergieanlage (20) mit den Schritten
● Aufziehen eines Gurtsystems (7) auf ein zu montierendes Rotorblatt (10) mit einer blattwurzelseitigen Spannvorrichtung (1), mindestens einem in Blattlängsrichtung verlaufenden Längsgurt (2), mindestens einem in Blattquerrichtung verlaufenden Quergurt (3) und einem blattspitzenseitigen Fixiermittel (5), wobei mindestens ein aerodynamisch wirksamer Störkörper an dem mindestens einen Längsgurt (2) und/oder Quergurt angeordnet ist,
● Spannen der Spannvorrichtung (1), so dass der mindestens eine Längsgurt (2) unter Spannung gehalten wird,
● Aufhängen des Rotorblatts (10) an einer Hebevorrichtung (8) zur horizontalen Montage des Rotorblattes (10) mit Hilfe von Hebegurten (9) beziehungsweise Aufhängen des Rotorsterns an einem zentrierten Hebegurt (9) zur Montage des Rotorsterns,
● Montieren des Rotorblatts (10) beziehungsweise des Rotorsterns,
● Lösen der Spannvorrichtung (1) nach der Montage und
● Abziehen des Gurtsystems (7) und Herablassen vom montierten Rotorblatt beziehungsweise vom Rotorstern auf den Boden.

15. Verfahren nach Anspruch 14, wobei mindestens eine Hinterkantenfixierung (4) an der Hinterkante (16) des Rotorblattes (10) angeordnet wird, nachdem oder bevor das Gurtsystem (7) auf das zu montierende Rotorblatt (10) aufgezogen wurde.

16. Verfahren nach Anspruch 14 oder 15, wobei eine Mehrzahl von aerodynamischen Störkörpern (6) an einem Teil der Längsgurte (2) und/oder an einem Teil der Quergurte (3) angeordnet wird, nachdem oder bevor das Gurtsystem (7) auf das zu montierende Rotorblatt (10) montiert wurde.
